# EUROPEAN PATENT SPECIFICATION

(11) **EP 2 269 820 B1**
(45) Date of publication and mention of the grant of the patent: **19.08.2015**
(21) Application number: 10425135.0
(22) Date of filing: 26.04.2010
(51) Int. Cl.: B32B 29/02, B31F 1/07, D21H 27/32

(54) **Embossed multi-ply cellulosic material**
Geprägtes mehrlagiges cellulosehaltiges Material
Matériau cellulosique gaufré à plusieurs épaisseurs

(30) Priority: 08.06.2009 IT FI20090127
(43) Date of publication of application: 05.01.2011
(73) Proprietor: Delicarta SPA, 55016 Porcari (Lucca) (IT)
(72) Inventor: Emi, Stefani, 55016 Porcari (LU) (IT)
(74) Representative: Mannucci, Michele

(56) References cited:
- EP-A1- 1 911 574
- WO-A1-99/44814
- DE-U1-202004 011 289

## Description

### Technical Field

The present invention relates to improvements cellulosic materials made of more plies, at least one of which is embossed for producing, for instance, toilet paper, kitchen towels and the like.

### State of the Art

For producing absorbent products, such as toilet paper, kitchen towels, paper handkerchiefs and the like, a cellulosic material is used as base material, i.e. a material in cellulose fiber, in the form of one or more plies coupled to each other and variously decorated or processed to obtain particular aesthetic and technical-functional characteristics. The cellulosic material used for this type of production is a paper with particular features of softness and absorption capacity, usually called tissue paper.

Embossing is one of the more widely used working for processing tissue paper for obtaining products of the type mentioned above. This operation consists in making the cellulosic material pass in a nip between two rollers provided with protuberances and/or cavities and, as the case may be, one of them provided with an elastically yielding surface, to give a mechanical deformation to the base cellulosic material. This permanent mechanical deformation, which involves displacement, deformation or breakage of the base material fibers, increases the apparent thickness of the cellulosic material and imparts to it particular technical-functional characteristics, such as for example a greater apparent thickness, a greater absorption capacity, better tactile characteristics, a surface working suitable to increase the ability of the material to remove solid or liquid materials from a surface, and other characteristics known to those skilled in the art.

Embossing is also used to impart to the product a particular aesthetic characteristic, i.e. to obtain on it patterns formed by cavities on the outer surface of the cellulosic material, corresponding to protuberances of the cellulosic material facing the inside of the material, when it is formed by at least two or more plies coupled to each other.

Embossing is performed in embossing or embossing-laminating units. These latter have also the function of coupling two or more plies to one another, at least one of which is embossed or both are embossed separately from each other. Coupling is performed by applying a glue on at least some of the protuberances formed by embossing on at least one of the plies forming the multi-layer material by means of a glue dispenser, usually arranged along the circumferential development of an embossing roller, upstream of a lamination nip or a coupling nip, in which two or more plies are coupled to each other. Laminating of plies, with reciprocal compression of a ply against the other to facilitate and promote the adhesion, can occur in the coupling nip, defined usually between two embossing rollers, or downstream of it by using a laminating roller cooperating with one of the embossing rollers.

### Summary of the Invention

According to one aspect, the object of the present invention is to provide an embossed multi-ply cellulosic material, typically made of tissue paper, which has better technical-functional and aesthetic characteristics than those which can be obtained with the currently known products.

Substantially, in one embodiment the invention provides for an embossed multi-ply cellulosic material comprising at least one first outer ply and at least one second outer ply, wherein at least one of said outer plies is decorated with embossing, and wherein the plies are joined by gluing. Advantageously, the embossing defines raised decorative elements, projecting outwards from a gluing surface, where the ply decorated with said embossing is glued to an underlying ply. Furthermore, the decorative elements are separated from each other by said gluing surface. The glued area covers at least 15% of the whole surface of the cellulosic material. The surface surrounding the decorative elements is completely glued to the underlying ply.

In some embodiments of the invention the glued area covers at least 20%, preferably at least 25%, and more preferably at least 30% of the whole surface of the cellulosic material. In some preferred embodiments of the invention the glued surface is equal to or greater than 33% of the whole surface of the cellulosic material.

In some embodiments the decorative elements have a convex cross section and form respective swells, projecting towards the outside of the web material, raised with respect to the surrounding gluing surface. Advantageously, it is possible that each decorative element is formed by a plurality of projections projecting from the gluing surface towards the outside of the material, the protuberances of each single decorative element being defined and separated each from the other by glued areas.

The gluing surface develops around the decorative elements, thus forming a continuous distribution of glue surrounding said decorative elements, with an irregular path, the glued surface having a variable cross dimension and curvilinear edges, which define the contour of the decorative elements.

The glue can be colorless. In other embodiments the glue is colored. It is also possible to use glues of different colors, applied for instance by plate rollers.

Each ply can be single, or it can be composed in turn of more plies. Furthermore, in some embodiments at least one third ply can be provided, interposed between said first and second ply. The third ply can be smooth, or embossed or micro-embossed, together or separately relative to the outer plies.

In some embodiments the second outer ply is micro-embossed, with a distribution of protuberances facing the inside of the cellulosic material, with a density equal to or greater than 15 protuberances/cm² and preferably equal to or greater than 20 protuberances/cm², for example equal to or greater than 25-30 protuberances/cm². These protuberances can have a simple geometric shape, for example truncated-cone or truncated-pyramid shape, preferably with a front surface, facing the inside of the cellulosic material, equal to or smaller than 1 mm².

In other embodiments said second outer ply has a substantially mirror-like embossing relative to that of the first outer ply.

The multi-ply material according to the invention can have a weight per surface unit comprised between 25 and 100 g/m².

The glued surface is delimited by curvilinear edges, which follow and define the contour of the decorative elements, the ply with said decorative elements having a completely glued continuous surface, which fills the space between adjacent decorative elements, said glued continuous surface having a variable cross dimension with areas in which said cross dimension is preferably equal to or greater than 5 mm. The continuous glued surface can have, for instance, areas with a cross dimension greater than 7 mm and preferably greater than 9 mm.

### Brief description of the drawings

The invention will be better understood by following the description below and the attached drawing, which shows a non-limiting practical embodiment of the present invention. More particularly, in the drawing:
figure 1 shows a diagram of an embossing-laminating unit, with which a cellulosic material according to the invention can be manufactured;
figure 2 shows an enlargement of the detail indicated with II in figure 1;
figure 3 shows a schematic and greatly enlarged cross section of a cellulosic material obtained by means of the embossing-laminating unit of figure 1;
figure 4 shows a diagram of a further embossing-laminating unit, which can be used for manufacturing a material according to the invention;
figure 5 shows a schematic section of a product obtained by means of the machine of figure 4; and
figures 6, 7, and 8 show embossing patterns of various embodiments of a product according to the present invention.

### Detailed description of embodiments of the invention

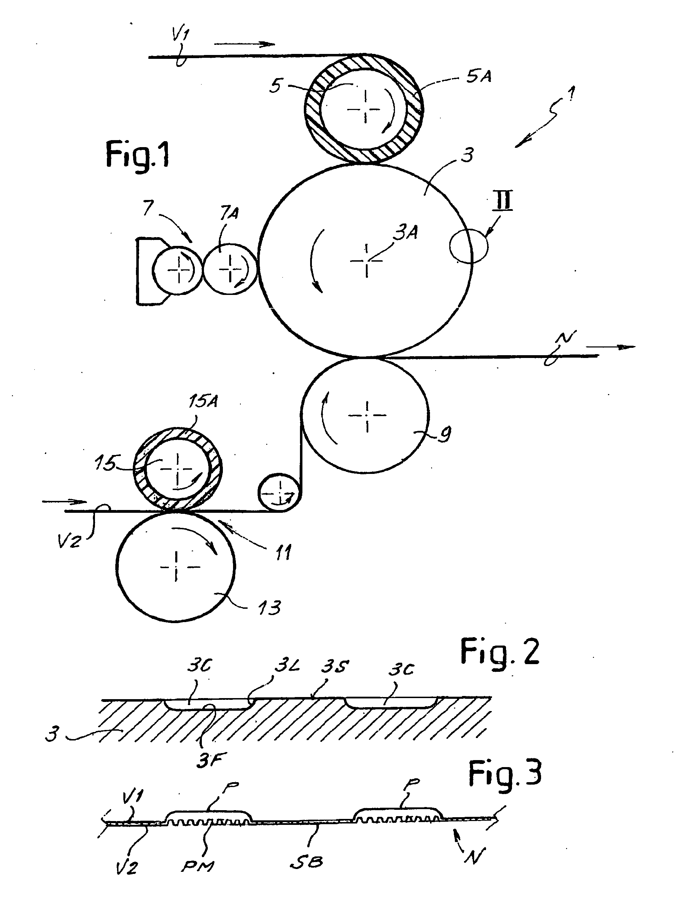

Figures 1 and 2 schematically show an embossing-laminating unit for producing an embossed cellulosic material according to the invention; figure 3 is a schematic section of an article obtained with this embossing-laminating unit.

Schematically, in this embodiment the embossing-laminating unit, indicated as a whole with number 1, comprises an embossing roller 3 cooperating with a pressure roller 5 provided with a coating 5A in elastically yielding material, for instance rubber. Along the circumferential development of the embossing roller 3 a glue dispenser 7 is arranged. Downstream of it, in the advancement direction of the ply V1 embossed by the embossing roller 3 and the pressure roller 5, a laminating roller 9 is arranged. In the nip formed between the embossing roller 3 and the laminating roller 9, the ply V1, previously embossed between the embossing roller 3 and the pressure roller 5, and a second ply V2 are fed. These two plies are coupled by means of glue applied by the glue dispensing unit 7 to form a multi-ply cellulosic web material, schematically indicated with N. The glue is applied on the embossed areas of the ply V1, as it will be better explained hereunder.

In the embodiment of figure 1, the ply V2 is previously subject to a micro-embossing by an auxiliary embossing unit 11, comprising an embossing roller 13 cooperating with a pressure roller 15 coated at 15A with an elastically yielding material. The embossing roller 13 can be provided with protuberances of simple geometric shape, for example truncated-cone or truncated-pyramid shape, of high density, for instance with a density of protuberances greater than 15 protuberances/cm² preferably equal to or greater than 20 protuberances/cm². In this way a thin embossing of small dimension is obtained on the ply V2, with protuberances whose front surface has preferably an area equal to or smaller than 1 mm².

Vice versa, the embossing made on the ply V1 has a much larger pattern, obtained by means of a particular working of the embossing roller 3. To better explain the conformation of the embossing roller 3, and therefore of the ply V1 worked through it, figure 2 shows a portion of the cross section, i.e. according to a plane orthogonal to the axis 3A, of the embossing roller 3, wherein cavities 3C are visible, obtained on the surface 3S of the embossing roller 3. The cavities 3C have a great surface and preferably a cross section characterized by particularly wide joint bending radii between the side walls 3L and the bottom wall 3F.

When the ply V1 is laminated between the pressure roller 5 and the embossing roller 3, it is subject to a mechanical deformation due to the effect of the mechanically yielding material forming the coating 5A of the pressure roller 5, which pushes the ply V1 of cellulosic material inside the cavities 3C forming swells, or reliefs, or cushions of material, while the portions of ply remaining into contact with the surface 3S not dug by the embossing roller 3 are simply pressed but not deformed, so that the ply V1 is subject, at the cavities 3C, to swells that bring the respective portions of ply out of the laying plane or surface of the ply, i.e. the surface represented by the cellulosic ply devoid of deformation.

The glue applied by the glue dispenser 7 is distributed on the surface portions of the ply V1 corresponding to the non-dug areas of the surface 3S of the embossing roller 3.

At the exit of the laminating nip defined between the laminating roller 9 and the embossing roller 3 a web material N is obtained, schematically represented in the enlarged section of figure 3. The cellulosic web material N has on a first face an embossing pattern constituted by protuberances P of wide surface in the form of cushions, bubbles or swells projecting form the base plane or base surface of the cellulosic material. This base surface is indicated with SB in figure 3 and is constituted by the surface of the material in ply V1 not subject to embossing and swelling due to effect of the cavities 3C, i.e. this surface corresponds to the surface that in the nip formed between the pressure rollers 5 and the embossing roller 3 is arranged at the surface portions 3S not dug by the embossing roller 3. In these surface areas the glue has been applied, preferably on the whole surface, i.e. on all the surface of this area, and the second micro-embossed ply V2 with a plurality of micro-protuberances PM is pushed at the surface SB where the micro-protuberances PM are therefore flattened to obtain a substantially continuous gluing surface.

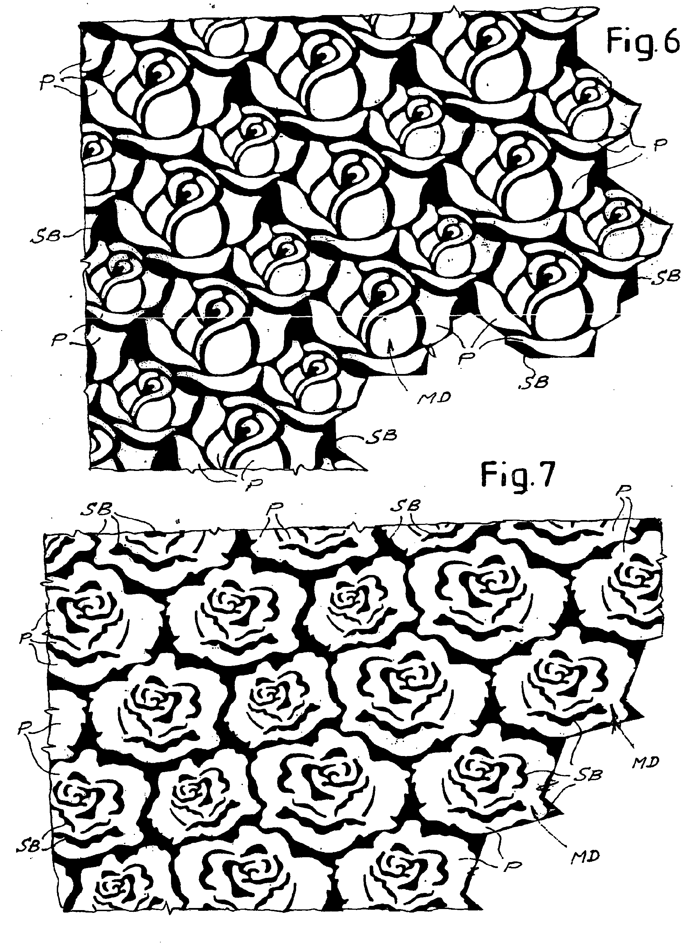

Figure 6 schematically shows an example of a pattern which can be obtained with this embossing system. In this example the embossing pattern is formed by a plurality of roses adjacent to each other. Just by way of example, the roses are of two different dimensions and substantially equal and repetitive shape. Each rose is formed by a series of reliefs constituted by the protuberances or cushions P of the ply V1. Each single protuberance P projecting from the base plane of the web material N is delimited by a curve line, the lines delimiting the various protuberances P being chosen so as to obtain visually the graphic effect of a flower. Each protuberance P is separated from the other protuberances P of the same decorative pattern, i.e. of the same rose, by surfaces (indicated in black in figure 6) representing the base surface SB, i.e. the completely glued surface of the material. Each completely glued base surface SB also separates a decorative pattern from the adjacent decorative patterns. As it is visible in figure 6, practically the base surface, i.e. the surface that has not been subject to embossing deformations to generate the reliefs P and on which the glue has been distributed, has a continuous path, i.e. from each point of the glued surface it is possible to reach any other point of the glued surface without crossing the protuberances P, i.e. remaining in the glued area. Furthermore, as it is shown in figure 6, the width of the glued area is variable to fill all the empty spaces between protuberances P whose pattern, shape and dimensions are set by the requirements to produce the decorative patterns. In this way, in particular, it should be noted how between a decorative pattern and the other there are glued areas of very great width.

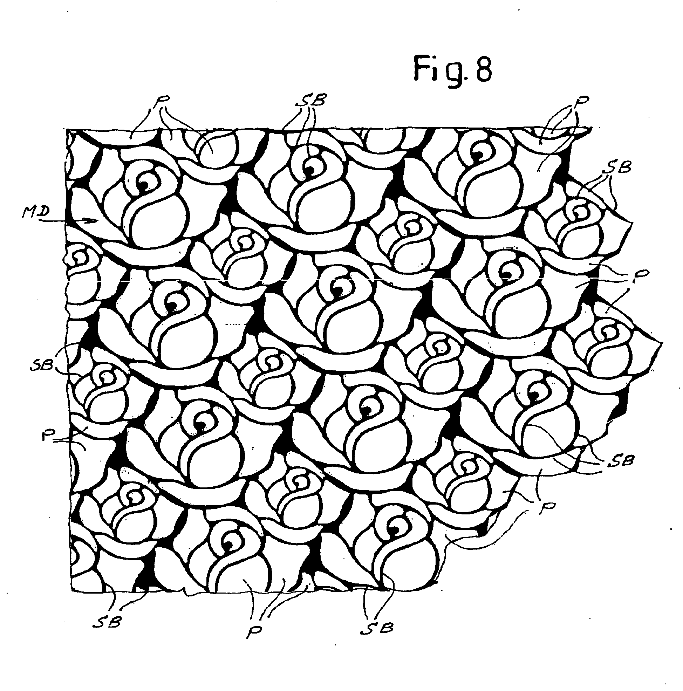

Figures 7 and 8 show variants of this embossing concept, which have again the characteristics described above with reference to figure 6. However, it should be noted in figure 7 how the continuity of the glued surface refers only to that glued area or surface which separates decorative elements or patterns adjacent to each other, represented again by flower drawings and indicated with MD. Inside these decorative patterns there are glued areas SB, separated from the outer glued surface surrounding each decorative pattern or element MD. In this case, each decorative pattern or element MD is formed by a single protuberance P of complex and indented shape, containing inside itself areas not projecting from the base plane of the web material and in which the glue has been applied, so as to be on the same level of the glued surface SB surrounding each decorative pattern MD.

In general, as it is shown in figures 6, 7, and 8, the characteristic of this embossing system is represented in particular by the presence of substantially continuous glued areas of wide surface, developing to surround adjacent decorative patterns, where the delimitation of the glued surfaces is given by the curve lines defining a greatly variable width of the glued area. In fact, as it is shown in figures 6 to 8, by filling the space between adjacent decorative patterns MD, the glued surface has a profile delimited by curve lines and consequently with a variable width, variable in a manner corresponding to the distance of the points of the profiles of adjacent decorative patterns.

Advantageously, the glued area can be greater than 15%, and also greater than 20% of the overall surface of the product. More preferably, the glued surface can be equal to or greater than 25%, for instance equal to or greater than 29% and also equal to or greater than 30% of the overall surface. In preferred embodiments of the invention, the glued area can be equal to or greater than 33% of the overall surface of the cellulosic web material N.

In particular, in the example illustrated in figure 6 the glued surface is totally equal to 34.43% of the overall surface of the web material, in the example of figure 7 the glued surface is equal to 29.22% and in the example of figure 8 the glued surface is equal to 21.04% of the overall surface.

Substantially, the embossed cellulosic material according to the invention is different to the existing products in view of a different effect and a different function of the applied glue. While in the traditional products the glue is applied in areas of modest dimensions and generally of constant width, which constitute the decorative patterns and correspond to protuberances projecting toward the inside of the material, whilst the surrounding surface of the material remains substantially unchanged, the cellulosic web material according to the present invention is characterized by decorative patterns formed by protuberances or swells projecting towards the outside of the material, separated from each other by completely glued surfaces, i.e. surfaces in which there is a substantially uniform distribution of glue and which separate a decorative pattern from the other, in correspondence of which the web material remains on the original surface of the material without projecting through permanent embossing deformation.

To obtain a further aesthetic advantage and a better strike of the decorative patterns, according to some embodiments the glue can be colored. In other embodiments it is also possible to apply the glue with plate rollers so as to have different glues in different areas of the cellulosic web material, each glue presenting an own color, different from that of the other glues, substantially obtaining in this way a sort of multicolor printing.

A cellulosic web material according to the present invention can be also obtained with embossing laminating techniques different from those illustrated with reference to figures 1 and 2.

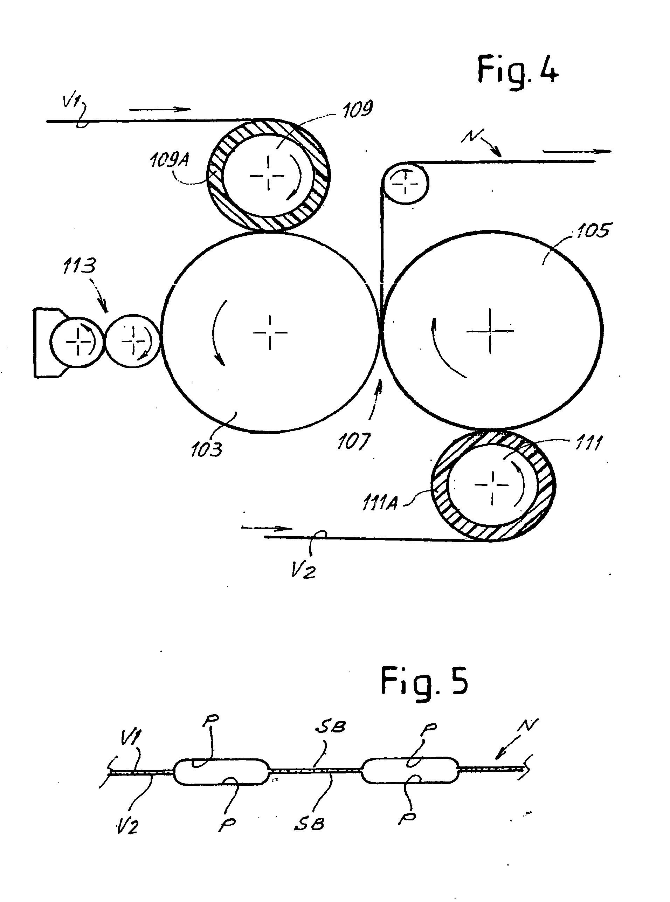

Figure 4 shows an embossing-laminating unit 100 of the tip-to-tip type, known to those skilled in the art. This embossing-laminating unit has a pair of embossing rollers 103, 105, which define a laminating nip 107. The embossing rollers 103, 105 cooperate each with a pressure roller 109 and 111 respectively. The roller 109 is provided with an elastically yielding coating 109A and the pressure roller 111 is provided with an elastically yielding coating 111A.

In this way two embossing nips are defined between the rollers 103 and 109 and between the rollers 105 and 111 respectively. In these nips two plies V1 and V2 of cellulosic web material are separately embossed, and they are then coupled in the laminating nip 107 to form the cellulosic multi-ply web material N. Joining between the plies is obtained by means of glue applied with a glue dispenser 113. In this embodiment the two embossing rollers 103 and 105 can have dug surfaces as indicated schematically in figure 2, and they are substantially mirror-like to each other, so that the two plies V1 and V2 are embossed with decorative patterns formed by one or more protuberances or swells which, in the cellulosic multi-ply web material N obtained by joining them, face the outside of the material. The integral surfaces, i.e. the non-dug surfaces, of the rollers 103 and 105 match to each other in the laminating nip 107 and the reciprocal pressure causes gluing of the plies.

A cellulosic multi-ply web material N is thus obtained, schematically represented in the section of figure 5, where equal numbers indicate equal or equivalent parts to those of figure 3.

In other embodiments, not shown, the embossing-laminating unit can be constituted by a so called nested embossing unit. It is also possible to produce a cellulosic multi-ply web article of the type described above also with embossing or embossing laminating units of other type.

It is understood that the drawing only shows an example provided by way of a practical demonstration of the present invention, which can vary in forms and arrangements without however departing from the scope of the concept underlying the invention. Any reference numbers in the appended claims are provided for the sole purpose of facilitating reading of the claims in the light of the description and the drawing, and do not in any manner limit the scope of protection represented by the claims.

## Claims

1. An embossed multi ply cellulosic material comprising at least one first outer ply and at least one second outer ply, wherein at least one of said outer plies is decorated with an embossing, and wherein plies are joined through gluing; **characterized in that**
- said embossing defines raised decorative elements, projecting outwards relative to a gluing surface, at which the ply decorated with said embossing is glued to an underlying ply;
- said decorative elements are separated from each other by said gluing surface, wherein the gluing surface develops around the decorative elements, thus forming a continuous distribution of glue surrounding each said decorative element, with an irregular trend, the glued surface presenting a variable cross dimension and curvilinear edges, which define the contour of the decorative elements;
- the surface surrounding said decorative elements is completely glued to the underlying ply
- the glued area covers at least 15% of the whole surface of the cellulosic material.

2. Cellulosic material as claimed in claim 1, wherein the glued area covers at least 20%, preferably at least 25%, and more preferably at least 30% of the whole surface of the cellulosic material.

3. Cellulosic material as claimed in claim 1, wherein the glued area covers at least 33% of the whole surface of the cellulosic material.

4. Cellulosic material as claimed in one or more of the previous claims, wherein said decorative elements present a convex cross section and form respective swells projecting towards the outside of the web material, raised relative to the surrounding gluing surface.

5. Cellulosic material as claimed in one or more of the previous claims, wherein: each decorative element is formed by a plurality of projections projecting towards the outside of the material from the gluing surface, the protuberances of each single decorative element being defined and separated each from the other by glued areas; each single protuberance is delimited by a curve line; each protuberance is separated from the other protuberances of the same decorative pattern by said gluing surface which also separates a decorative pattern from the adjacent decorative patterns.

6. Cellulosic material as claimed in one or more of the previous claims, wherein inside said decorative elements there are non-projecting glued areas, separated from an outer glued surface surrounding each decorative element, said decorative elements being formed by a single protuberance of complex and indented shape, containing inside said non-projecting glued areas..

7. Cellulosic material as claimed in one or more of the previous claims, wherein the glue is colored.

8. Cellulosic material as claimed in one or more of the previous claims, comprising at least a third ply interposed between said first and second ply.

9. Cellulosic material as claimed in claim 8, wherein said at least one third ply is embossed together with said first ply and present said decorative elements.

10. Cellulosic material as claimed in one or more of the previous claims, wherein the second outer ply is micro - embossed, with a distribution of protuberances facing towards the inside of the cellulosic material, with a density equal to or greater than 15 protuberances/cm² and preferably equal to or greater than 20 protuberances/cm².

11. Cellulosic material as claimed in claim 10, wherein said protuberances of the second outer ply are of truncated - cone or truncated pyramid shaped, with a front surface, facing towards the inside of the cellulosic material, equal or lower than 1 mm².

12. Cellulosic material as claimed in one or more of claims 1 to 9, wherein said second outer ply presents an embossing substantially mirror-like relative to that of the first outer ply.

13. Cellulosic material as claimed in one or more of the previous claims, with a weight per surface unit comprised between 25 and 100 g/m².

14. Cellulosic material as claimed in one or more of the previous claims, wherein the gluing surface is delimited by curvilinear edges, which follow and define the contour of the decorative elements, the ply with said decorative elements presenting a completely glued continuous surface, which fills the space between adjacent decorative elements, said glued continuous surface presenting a variable cross dimension with areas in which said cross dimension is equal to or greater than 5 mm.

15. Cellulosic material as claimed in claim 14, wherein the glued continuous surface presents areas with a cross dimension greater than 7 mm and preferably greater than 9 mm.

## Patentansprüche

1. Geprägtes mehrlagiges Zellulosematerial, umfassend wenigstens eine erste äußere Lage und wenigstens eine zweite äußere Lage, wobei wenigstens eine der äußeren Lagen mit einer Prägung dekoriert ist und wobei die Lagen durch Kleben miteinander verbunden sind;
**dadurch gekennzeichnet, dass**
- die Prägung erhabene dekorative Elemente definiert, die in Bezug auf eine Klebefläche nach außen vorragen, an der die mit der Prägung dekorierte Lage mit einer darunterliegenden Lage verklebt ist;
- die dekorativen Elemente durch die Klebefläche voneinander getrennt sind, wobei sich die Klebefläche um die dekorativen Elemente erstreckt, wodurch eine durchgängige Verteilung des Klebers erzielt wird, der jedes dekorative Element mit einer Neigung zur Unregelmäßigkeit umgibt, wobei die geklebte Fläche einen variablen Durchmesser und krummlinige Ränder aufweist, welche die Kontur der dekorativen Elemente definieren;
- die Oberfläche, welche die dekorativen Elemente umgibt, vollständig mit der darunterliegenden Lage verklebt ist;
- der geklebte Bereich wenigstens 15% der Gesamtfläche des Zellulosematerials bedeckt.

2. Zellulosematerial nach Anspruch 1, wobei der geklebte Bereich wenigstens 20%, vorzugsweise wenigstens 25% und insbesondere wenigstens 30% der Gesamtfläche des Zellulosematerials bedeckt.

3. Zellulosematerial nach Anspruch 1, wobei der geklebte Bereich wenigstens 33% der Gesamtfläche des Zellulosematerials bedeckt.

4. Zellulosematerial nach einem oder mehreren der vorhergehenden Ansprüche, wobei die dekorativen Elemente einen konvexen Querschnitt aufweisen und jeweilige Vorwölbungen bilden, die in Richtung auf die Außenseite des bahnförmigen Materials vorspringen und in Bezug auf die umgebende Klebefläche erhaben sind.

5. Zellulosematerial nach einem oder mehreren der vorhergehenden Ansprüche, wobei jedes dekorative Element durch eine Vielzahl von Vorsprüngen gebildet wird, die von der Klebefläche in Richtung auf die Außenseite des Materials vorragen, wobei die Vorwölbungen jedes einzelnen dekorativen Elements durch geklebte Bereiche definiert und voneinander getrennt werden; wobei jede einzelne Vorwölbung durch eine Kurvenlinie definiert wird; wobei jede Vorwölbung von den anderen Vorwölbungen des gleichen dekorativen Musters durch die Klebefläche getrennt wird, die auch ein dekoratives Muster von den angrenzenden dekorativen Mustern trennt.

6. Zellulosematerial nach einem oder mehreren der vorhergehenden Ansprüche, wobei sich innerhalb der dekorativen Elemente nicht vorspringende geklebte Bereiche befinden, die von einer äußeren geklebten Fläche getrennt sind, die jedes dekorative Element umgibt, wobei die dekorativen Elemente durch eine einzige Vorwölbung mit komplexer und gekerbter Form gebildet werden, die in ihr die nicht vorspringenden geklebten Bereiche enthält.

7. Zellulosematerial nach einem oder mehreren der vorhergehenden Ansprüche, wobei der Kleber farbig ist.

8. Zellulosematerial nach einem oder mehreren der vorhergehenden Ansprüche, umfassend wenigstens eine dritte Lage, die zwischen der ersten und der zweiten Lage angeordnet ist.

9. Zellulosematerial nach Anspruch 8, wobei die wenigstens eine dritte Lage gemeinsam mit der ersten Lage geprägt wird und die dekorativen Elemente aufweist.

10. Zellulosematerial nach einem oder mehreren der vorhergehenden Ansprüche, wobei die zweite äußere Lage durch eine Verteilung von Vorwölbungen mikrogeprägt ist, die der Innenseite des Zellulosematerials zugewandt sind, wobei die Dichte gleich oder größer als 15 Vorwölbungen/cm² und vorzugsweise gleich oder größer als 20 Vorwölbungen/cm² ist.

11. Zellulosematerial nach Anspruch 10, wobei die Vorwölbungen der zweiten äußeren Lage kegelstumpfförmig oder pyramidenstumpfförmig sind und eine der Innenseite des Zellulosematerials zugewandte Vorderfläche aufweisen, die gleich oder kleiner als 1 mm² ist.

12. Zellulosematerial nach einem oder mehreren der Ansprüche 1 bis 9, wobei die zweite äußere Lage eine Prägung aufweist, die in Bezug auf jene der ersten äußeren Lage im Wesentlichen spiegelförmig ist.

13. Zellulosematerial nach einem oder mehreren der vorhergehenden Ansprüche mit einem Gewicht pro Flächeneinheit zwischen 25 und 100 g/cm².

14. Zellulosematerial nach einem oder mehreren der vorhergehenden Ansprüche, wobei die Klebefläche durch krummlinige Ränder begrenzt wird, die der Kontur der dekorativen Elemente folgen und diese definieren, wobei die Lage mit den dekorativen Elemente eine vollständig geklebte, durchgehende Oberfläche aufweist, die den Raum zwischen benachbarten dekorativen Elementen füllt, wobei die geklebte, durchgehende Oberfläche einen variablen Durchmesser mit Bereichen aufweist, in denen der Durchmesser gleich oder größer als 5 mm ist.

15. Zellulosematerial nach Anspruch 14, wobei die geklebte, durchgehende Oberfläche Bereiche mit einem Durchmesser von mehr als 7 mm und vorzugsweise mehr als 9 mm aufweist.

## Revendications

1. Matériau cellulosique gaufré à plusieurs épaisseurs, comprenant au moins une première épaisseur extérieure et au moins une deuxième épaisseur extérieure, dans lequel au moins une desdites épaisseurs extérieures est décorée avec un gaufrage, et dans lequel les épaisseurs sont liées par collage ;
**caractérisé en ce que**
- ledit gaufrage définit des éléments décoratifs en relief, se projetant vers l'extérieur par rapport à une surface de collage, au niveau de laquelle l'épaisseur décorée avec ledit gaufrage est collée à une épaisseur sous-jacente ;
- lesdits éléments décoratifs sont séparés les uns des autres par ladite surface de collage, la surface de collage se développant autour des éléments décoratifs, formant ainsi une distribution continue de colle entourant chacun desdits éléments décoratifs, selon une tendance irrégulière, la surface collée présentant une dimension transversale variable et des bords curvilinéaires qui définissent le contour des éléments décoratifs ;
- la surface entourant lesdits éléments décoratifs est entièrement collée à l'épaisseur sous-jacente ;
- la zone collée couvre au moins 15 % de la surface totale du matériau cellulosique.

2. Matériau cellulosique selon la revendication 1, dans lequel la zone collée couvre au moins 20 %, de préférence au moins 25 %, et plus préférablement au moins 30 % de la surface totale du matériau cellulosique.

3. Matériau cellulosique selon la revendication 1, dans lequel la zone collée couvre au moins 33 % de la surface totale du matériau cellulosique.

4. Matériau cellulosique selon une ou plusieurs des revendications précédentes, dans lequel lesdits éléments décoratifs présentent une coupe transversale convexe et forment des renflements respectifs se projetant vers l'extérieur du matériau toilé, en relief par rapport à la surface de collage environnante.

5. Matériau cellulosique selon une ou plusieurs des revendications précédentes, dans lequel chaque élément décoratif est formé d'une pluralité de saillies se projetant vers l'extérieur du matériau à partir de la surface de collage, les protubérances de chaque élément décoratif unique étant définies et séparées les unes des autres par des zones collées ; chaque protubérance unique est délimitée par une ligne courbe ; chaque protubérance est séparée des autres protubérances ayant le même motif décoratif par ladite surface de collage qui sépare également un motif décoratif des motifs décoratifs adjacents.

6. Matériau cellulosique selon une ou plusieurs des revendications précédentes, dans lequel à l'intérieur desdits éléments décoratifs il y a des zones collées non en saillie, séparées par une surface collée extérieure entourant chaque élément décoratif, lesdits éléments décoratifs étant formés d'une protubérance unique de forme complexe et dentelée, contenant à l'intérieur lesdites zones collées non en saillie.

7. Matériau cellulosique selon une ou plusieurs des revendications précédentes, dans lequel la colle est colorée.

8. Matériau cellulosique selon une ou plusieurs des revendications précédentes, comprenant au moins une troisième épaisseur interposée entre lesdites première et deuxième épaisseurs.

9. Matériau cellulosique selon la revendication 8, dans lequel ladite au moins une troisième épaisseur est gaufrée conjointement avec ladite première épaisseur et présente lesdits éléments décoratifs.

10. Matériau cellulosique selon une ou plusieurs des revendications précédentes, dans lequel la deuxième épaisseur extérieure est micro-gaufrée, avec une distribution de protubérances qui font face vers l'intérieur du matériau cellulosique, avec une densité égale ou supérieure à 15 protubérances /cm² et de préférence égale ou supérieure à 20 protubérances /cm².

11. Matériau cellulosique selon la revendication 10, dans lequel lesdites protubérances de la deuxième épaisseur extérieure ont une forme de cône tronqué ou de pyramide tronquée, avec une surface frontale, qui fait face vers l'intérieur du matériau cellulosique, égale ou inférieure à 1 mm².

12. Matériau cellulosique selon une ou plusieurs des revendications 1 à 9, dans lequel ladite deuxième épaisseur extérieure présente un gaufrage sensiblement en miroir par rapport à celui de la première épaisseur extérieure.

13. Matériau cellulosique selon une ou plusieurs des revendications précédentes, avec un poids par unité de surface compris entre 25 et 100 g/m².

14. Matériau cellulosique selon une ou plusieurs des revendications précédentes, dans lequel la surface de collage est délimitée par des bords curvilinéaires, qui suivent et définissent le contour des éléments décoratifs, l'épaisseur avec lesdits éléments décoratifs présentant une surface continue entièrement collée qui remplit l'espace entre des éléments décoratifs adjacents, ladite surface continue collée présentant une dimension transversale variable avec des zones dans lesquelles ladite dimension transversale est égale ou supérieure à 5 mm.

15. Matériau cellulosique selon la revendication 14, dans lequel la surface continue collée présente des zones avec une dimension transversale supérieure à 7 mm et de préférence supérieure à 9 mm.
